# EUROPÄISCHE PATENTSCHRIFT

(11) **EP 1 616 091 B1**
(45) Veröffentlichungstag und Bekanntmachung des Hinweises auf die Patenterteilung: **12.09.2007**
(21) Anmeldenummer: 04727258.8
(22) Anmeldetag: 14.04.2004
(51) Int. Cl.: F02D 21/08, F02B 47/08, F02D 13/02

(54) **VERFAHREN ZUR INNEREN ABGASRÜCKFÜHRUNG BEI EINER BRENNKRAFTMASCHINE**
INTERNAL EXHAUST GAS RECIRCULATION METHOD FOR AN INTERNAL COMBUSTION ENGINE
PROCEDE DE RECYCLAGE INTERNE DE GAZ D'ECHAPPEMENT AVEC UN MOTEUR A COMBUSTION INTERNE

(30) Priorität: 17.04.2003 DE 10317685
(43) Veröffentlichungstag der Anmeldung: 18.01.2006
(73) Patentinhaber: FEV Motorentechnik GmbH, 52078 Aachen (DE)
(72) Erfinder: MÜLLER, Jochen, 53757 Sankt Augustin (DE); KIRCHER, Bernd, 52382 Niederzier (DE); DUESMANN, Markus, 70439 Stuttgart (DE); LOHSE, Enno, 52223 Stolberg (DE)
(74) Vertreter: Neumann, Ernst Dieter
(86) Internationale Anmeldenummer: PCT/EP2004/003903
(87) Internationale Veröffentlichungsnummer: WO 2004/092561

(56) Entgegenhaltungen:
- AT-U1- 5 783
- DE-B- 1 222 735
- US-A- 4 722 315

## Beschreibung

Die Erfindung betrifft ein Verfahren zur inneren Abgasrückführung und eine entsprechend ausgestaltete Brennkraftmaschine.

Die Anforderungen an die Reinheit der Abgase von Brennkraftmaschinen werden weltweit in zunehmendem Maße gesetzlich reglementiert und verschärft. Eine Möglichkeit, diesen Anforderungen in Bezug auf NOₓ-Emissionen gerecht zu werden, besteht in der inneren Abgasrückführung. Hierbei wird in einem Zylinder der Brennkraftmaschine dem Frischgas vor Zündung eine bestimmte Menge Abgas beigemischt. Bei optimalem Mischverhältnis läßt sich die NOₓ-Emission deutlich verringern.

Zur Herstellung des Gemischs ist aus DE 34 01 362 C2 ein Verfahren zur inneren Abgasrückführung in einer Brennkraftmaschine mit periodisch von einer Nockenwelle nach dem Viertaktprinzip gesteuerten Ladungswechselventilen bekannt, bei dem die nach Abschluß des Ladungswechsels im Zylinder zusätzlich zum Frischgas verbleibende Abgasmenge über die Öffnungs- und Schließzeiten der Ladungswechselventile einstellbar ist. Wird z.B. ein Auslaß nach abgeschlossenem Ausschieben von Abgas aus dem Zylinder nicht geschlossen, sondern für eine einstellbare Zeitspanne während des sich anschließenden Ansaugtakts noch offen gelassen, kann zusammen mit Frischgas eine von der Länge der Zeitspanne abhängige Menge Abgas mit angesaugt werden. Somit steuern die Öffnungs- und Schließzeiten der Ladungswechselventile gleichzeitig den Ladungswechsel und die innere Abgasrückführung. Ihre Auslegung stellt somit einen Kompromiß zwischen optimalem Ladungswechsel und optimaler innerer Abgasrückführung dar.

Aus WO 03/040540 ist ein Verfahren zur inneren Abgasrückführung bekannt, bei dem während des Ladungswechselausschiebens von Abgas aus dem Zylinder in den Auslaßkanal ein Einlaßventil geöffnet ist, um einen Teil des Abgases in den Einlaßkanal auszuschieben, so daß beim nächsten Ladungswechselansaugen sowohl Frisch- als auch Abgas aus dem Einlaßkanal angesaugt wird. Hierbei wird das Einlaßventil während des Ladungswechselausschiebens unabhängig vom periodischen Ladungswechselansaugen betätigt, wobei der Beginn des Vorhubes des Einlaßventils im Bereich zwischen 180° bis 210° und das Ende hiervon im Bereich von etwa 270° bis 310° Kurbelwinkel nach dem oberen Totpunkt der Zündung liegt. Dies läßt jedoch nur mäßige Abgasrückführungsraten bei Vollast zu.

Der Erfindung liegt daher die Aufgabe zugrunde, eine innere Abgasrückführung zu schaffen, bei der bei Vollast sehr hohe Abgasrückführungsraten und bei niedrigen Drehzahlen geringe bis gar keine Abgasrückführungsraten ermöglicht werden.

Demgemäß wird erfindungsgemäß eine innere Abgasrückführung in einer Brennkraftmaschine mit periodisch von einer Nockenwelle nach dem Viertaktprinzip gesteuerten Ladungswechselventilen geschaffen, bei der während des Ladungswechselausschiebens von Abgas aus dem jeweiligen Zylinder in den Auslaßkanal ein zum jeweiligen Zylinder gehöriges Einlaßventil in einem Kurbelwinkelbereich nach dem oberen Totpunkt der Zündung des im Zylinder befindlichen Gasgemisches geöffnet ist, um einen Teil des Abgases in einen Einlaßkanal auszuschieben, so daß beim nächsten Ladungswechselansaugen sowohl Frisch- als auch Abgas aus dem Einlaßkanal angesaugt wird, wobei das jeweilige Einlaßventil während des Ladungswechselausschiebens unabhängig vom periodischen Ladungswechselansaugen betätigt wird und das zusätzliche Öffnen des jeweiligen Einlaßventils im Bereich von 110 bis 150% des Öffnungswinkels des Beginns des Öffnens des Auslaßkanals durch das Auslaßventil vorgenommen wird.

Entgegen den Erwartungen des Fachmanns hat sich herausgestellt, daß es möglich und zugleich günstig ist, wenn man Abgas in den Einlaßkanal in dem genannten Bereich, der deutlich vor 180° Kurbelwinkel (KW) nach dem oberen Totpunkt der Zündung (180° KW ist der untere Totpunkt nach dem oberen Totpunkt der Zündung), d.h. bei etwa 110 bis 150°KW nach dem oberen Totpunkt der Zündung liegt, schieben und bei hohen Drehzahlen auch im Einlaßkanal behalten kann. Hingegen erhält man bei niedrigen Drehzahlen aufgrund der bereits stärkeren Entlastung durch Expansion Druckverhältnisse, bei denen das in den Einlaßkanal transportierte Abgas sofort wieder zurückströmt, in der anschließenden Ausschiebephase in den Auslaßkanal mit ausgeschoben wird und daher nicht an einer zusätzlichen Abgasrückführung vom Einlaßkanal während der Ansaugphase teilnimmt. Durch die unabhängige Einstellbarkeit der Einlaß- und Auslaßventilöffnung in obiger Weise wird die Nutzung der im Zylinder vorhandenen Abgasmengen in einem Umfang ermöglicht, der zur Absenkung der NOx-Raten auf gewünschte und gesetzgeberisch geforderte Werte erforderlich ist. Hierdurch läßt sich auch eine relativ einfache Nachrüstung vornehmen, um diese Werte nachträglich zu erreichen. Erfindungsgemäß wird kein Abgas aus der Abgasleitung zurückgesaugt, da dieses nicht genügend Potential in Bezug auf die Absenkung der NOx-Raten aufweist und zudem einen Turbolader zu stark beeinflussen würde. Abgesehen davon führt eine relativ hohe Abgasrückführung im unteren Drehzahlbereich aufgrund des dadurch reduzierten Luft-Kraftstoff-Verhältnisses zu erhöhten Rauchzahlen, die erfindungsgemäß vermieden werden können.

Das erfindungsgemäße Verfahren wirkt sich insbesondere günstig bei Nutzfahrzeugmotoren im Vollastbereich mit sehr hohen Abgasrückführungsraten aus.

Erfindungsgemäß wird mit festen Nocken der Nockenwelle und einem Vor-oder Zusatznocken gearbeitet, wobei die Druckverhältnisse so sind, daß bei niedrigen Drehzahlen nach Auslaßventilöffnung der Druck schon abgefallen ist, so daß sich bald nach Einlaßventilöffnung mittels des Vornockens die Strömungsrichtung umkehrt, das Abgas im Einlaßkanal somit zurückgeschoben und mit ausgespült wird, bevor der Hauptnocken das Einlaßventil öffnet und das Auslaßventil schließt. - Dagegen ist bei Verwendung des Hauptnockens alleine, wie beim Stand der Technik üblich, wegen dessen für alle Lastpunkte gleichermaßen gültigen Kontur die Menge an rückgeführtem Abgas zwar lastpunktabhängig und daher auch drehzahlabhängig, aber fixiert, zumal durch die Parameter maximaler Ventilhub, Öffnungsdauer und relative Positionierung die Menge des in den Einlaßkanal übertragenen Abgases festgelegt ist.

Zusätzlich kann während des Ansaugens von Frischgas aus einem Einlaßkanal in einen Zylinder ein Auslaßventil geöffnet sein, um zusätzlich Abgas aus einem Auslaßkanal anzusaugen, wobei auch das Auslaßventil während des Ansaugens unabhängig vom periodischen Ausschieben betätigt wird.

Durch Entkopplung des Ladungswechsels von der inneren Abgasrückführung können beide unabhängig voneinander optimal auf die jeweiligen Anforderungen abgestimmt werden. Grenzen der Optimierung der Abgasrückführung über die Öffnungs- und Schließzeit sowie den Hub des entsprechenden Ventils ergeben sich lediglich aus den im Zylinder herrschenden Druckverhältnissen, die ein Öffnen bzw. Schließen von Ventilen u.U. nicht zu jeder Zeit gestatten, sowie gegebenenfalls durch die Konstruktion der Brennkraftmaschine und insbesondere der Ventiltriebskomponenten.

Im Ergebnis sind im Vergleich zum Stand der Technik höhere Abgasrückführungsraten bei Vollast erzielbar. Zudem ergibt sich eine Verringerung des Kraftstoffverbrauchs, die u.a. auf reduzierte Ladungswechselarbeit infolge geringerer Abgasmassenströme zurückzuführen ist.

Das Ein- bzw. das Auslaßventil kann eines der Ladungswechselventile oder ein Zusatzventil sein. Ersteres erlaubt eine kompaktere Bauform der Brennkraftmachine, letzteres gestattet wegen der mechanischen Entkopplung eine Abstimmung in weiteren Grenzen.

Die Steuerung des Ein- bzw. des Auslaßventils zur Abgasrückführung kann über die Nockenwelle erfolgen. Hierzu ist lediglich ein Zusatznocken auf der Nockenwelle erforderlich. Dieser kann vor dem Einlaß- bzw. nach dem Auslaßnocken angeordnet sein. Die aufeinanderfolgenden Flanken des Zusatznockens für die Abgasrückführung und des Nockens für den Ladungswechsel sollten sich hierbei nicht schneiden, d.h. die Ablaufflanke des Zusatznockens und die Anlaufflanke des Einlaßnockens bzw. die Ablaufflanke des Auslaßnockens und die Anlaufflanke des Zusatznockens. Zur Anpassung der Steuerzeiten an den Motorzustand kann gegebenenfalls auch eine verstellbare Nockenwelle verwendet werden.

Die Steuerung des Ein- bzw. des Auslaßventils zur Abgasrückführung kann statt dessen auch elektromechanisch erfolgen.

Ist das Ein- bzw. Auslaßventil ein Zusatzventil, ist eine elektrische Steuereinrichtung elektrisch mit einem an sich bekannten elektromagnetischen, -mechanischen, -hydraulischen, -pneumatischen etc. Aktuator verbunden, der direkt oder, für eine flachere Bauform und erhöhte Betätigungskraft, über einen Umlenkhebel od. dgl. an dem Zusatzventil angreift. Durch die von der Nockenwelle entkoppelte Steuerung kann betriebszustandsabhängig gesteuert werden, so daß die Ventilhebungskurven zu jedem Zeitpunkt optimal einstellbar sind. Hierzu kann in der elektrischen Steuereinrichtung ein Kennfeld gespeichert sein, welches die Steuerzeiten und den Hub für die Ventile als Funktion der Betriebsparameter (z.B. Lastzustand) der Brennkraftmaschine liefert.

Ist das Ein- bzw. Auslaßventil ein Ladungswechselventil, ist zu dessen Anlenkung ein elektromagnetischer Aktuator vorgesehen, der an einem Schenkel eines im Zylinderkopf gelagerten Umlenkhebels angreift, dessen anderer Schenkel über einen Freilauf mit dem freien Ende eines der Ladungswechselventile gekoppelt ist, der ein nockenwellengesteuertes Öffnen des Ladungswechselventils ohne Anlenkung des Umlenkhebels ermöglicht.

Die Anlenkung über einen Freilauf entkoppelt die Aktuatorbetätigung des Ladungswechselventils von der Nockenwellenbetätigung. Dadurch kann die zusätzliche Betätigung des Ladungswechselventils optimal und insbesondere betriebszustandsabhängig gesteuert werden. Der Abgasanteil im Gemisch für die innere Abgasrückführung ist dadurch auch ohne Zusatzventil insbesondere unter Berücksichtigung des Lastzustands der Brennkraftmaschine zu jedem Zeitpunkt optimal einstellbar.

Darüber hinaus eröffnen sich weitere Steuermöglichkeiten. Beispielsweise ist durch die elektromechanische Steuerung des Auslaßventils eine Motorbremsfunktion zuschaltbar. Hierbei wird das Auslaßventil während des Verdichtens kurz geöffnet, um den Zylinder gesteuert zu dekomprimieren und die Brennkraftmaschine zu bremsen. Die gewünschte Bremswirkung ist durch die Öffnungs- und Schließzeit sowie den Hub des Auslaßventils unabhängig von der Betätigung der Ladungswechselventile einstellbar.

Durch den Umlenkhebel können hohe Kräfte auf das Ladungswechselventil übertragen werden. Besonders vorteilhaft ist dies für die Motorbremsfunktion, bei der ein Auslaßventil gegen den hohen Zylinderinnendruck beim Verdichten geöffnet werden muß. Zudem ermöglicht der Umlenkhebel eine flache Bauform.

Der ventilseitige Schenkel des Umlenkhebels kann das freie Ende des Ladungswechselventils direkt oder indirekt, beispielsweise über eine Ventilbrücke oder einen Kipphebel, betätigen. Die direkte Betätigung eines Ladungswechselventils ist einfach in der Konstruktion und ermöglicht eine größtmögliche Betätigungskraft, wodurch sie sich besonders für die Motorbremsfunktion eignet. Greift der Schenkel beispielsweise über einen Kipphebel an einer Ventilbrücke an, können mehrere Ladungswechselventile gleichzeitig betätigt werden, allerdings mit geteilter Kraft.

Vorzugsweise ist der Freilauf ein in einer Hülse in Verlängerung der Achse des Ladungswechselventils verschieblicher Bolzen, der an dem ventilseitigen Schenkel des Umlenkhebels angeordnet sein kann. Hierdurch ist der Umlenkhebel führend mit dem Ladungswechselventil oder gegebenenfalls der Ventilbrücke o.ä. in Eingriff. Der Freilauf kann auch ein Ladungswechselventilseitiges Auflager sein, auf welchem ein Vorsprung am ventilseitigen Schenkel des Umlenkhebels zur Auflage kommt.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt einen Zylinder einer Viertakt-Brennkraftmaschine im Schnitt.

Fig. 2 und 3 zeigen Ventilhebungskurven für den Ein- bzw. Auslaß, wobei der Ventilhub als Funktion des Kurbelwinkels angegeben ist und der Zünd-oT bei 0° und der Ladungswechsel-oT bei 360° liegen.

Fig. 4 illustriert eine nockenwellenunabhängige Ventilsteuerung.

Fig. 5 zeigt einen Nockenwellenquerschnitt.

Fig. 6 zeigt einen Nockenwellenabschnitt.

Fig. 7 zeigt ein Diagramm, in dem beispielhaft für verschiedene Drehzahlen die erfindungsgemäße Übertragung von Abgas in den Einlaßkanal bzw. aus diesem in den Zylinder als Massenstrom gegenüber dem Kurbelwinkel aufgetragen ist.

Fig. 8 zeigt diagrammartig Leistung, Abgasrückführungsrate und relatives Luftverhältnis gegenüber der Drehzahl aufgetragen.

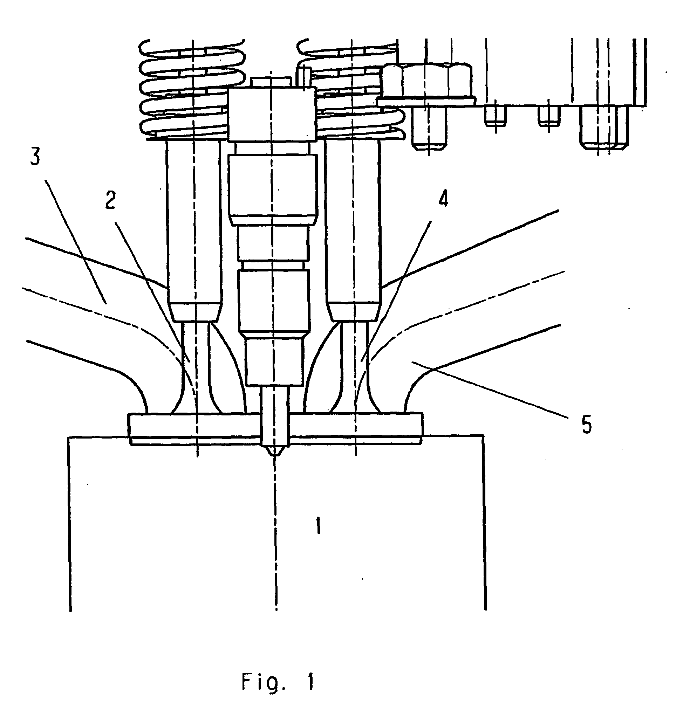

Der in Fig. 1 teilweise dargestellte Zylinder 1 einer Mehrzahl von Zylindern einer Viertakt-Brennkraftmaschine ist über ein Einlaßventil 2 mit einem Einlaßkanal 3 für Frischgas und über ein Auslaßventil 4 mit einem Auslaßkanal 5 für Abgas verbindbar.

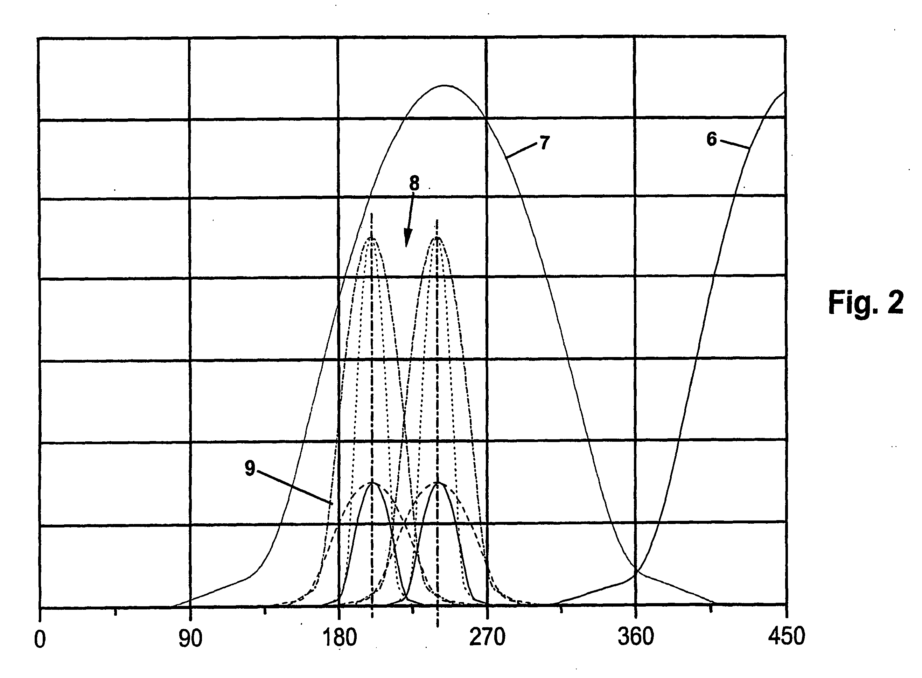

Die Brennkraftmaschine durchläuft aufeinanderfolgend die Arbeitstakte Ansaugen, Verdichten, Verbrennen und Ausschieben, wobei die Arbeitstakte Ausschieben und Ansaugen den Ladungswechsel darstellen. Hierzu werden die Ventile 2, 4 in bekannter Weise insbesondere nockenwellengesteuert periodisch betätigt. Beim Ansaugen ergibt sich die in Fig. 2 teilweise dargestellte Ventilhebungskurve 6 für das Einlaßventil 2 und beim Ausschieben die Ventilhebungskurve 7 für das Auslaßventil 4, wobei beide Ventilhebungskurven 6, 7 einander in bekannter Weise überlappen können, um das Abgas vollständig aus dem Zylinder 1 zu schieben.

Zur inneren Abgasrückführung werden das Ein- und/oder Auslaßventil 2, 4 darüber hinaus zusätzlich zum und unabhängig vom Ladungswechsel betätigt.

Eine zusätzliche Betätigung des Einlaßventils 2 während des Ausschiebens dient dazu, einen Teil des bei der Verbrennung entstehenden Abgases in den Einlaßkanal 3 einzulassen, um beim nächsten Ansaugen ein Gemisch aus Frisch-und Abgas in den Zylinder einzubringen. Um die Abgasmenge einzustellen, können die Öffnungs- und Schließzeitpunkte sowie der Ventilhub des Einlaßventils 2 entsprechend eingestellt werden, vgl. die Ventilhebungskurven 8. Zweckmäßigerweise öffnet das Einlaßventil 2 mit geringem Hub kurz nach dem Auslaßventil 4 und schließt deutlich vor diesem, vgl. die Ventilhebungskurve 9. Allerdings kann das Einlaßventil 2 auch vor dem Auslaßventil 4 oder zeitgleich mit diesem öffnen.

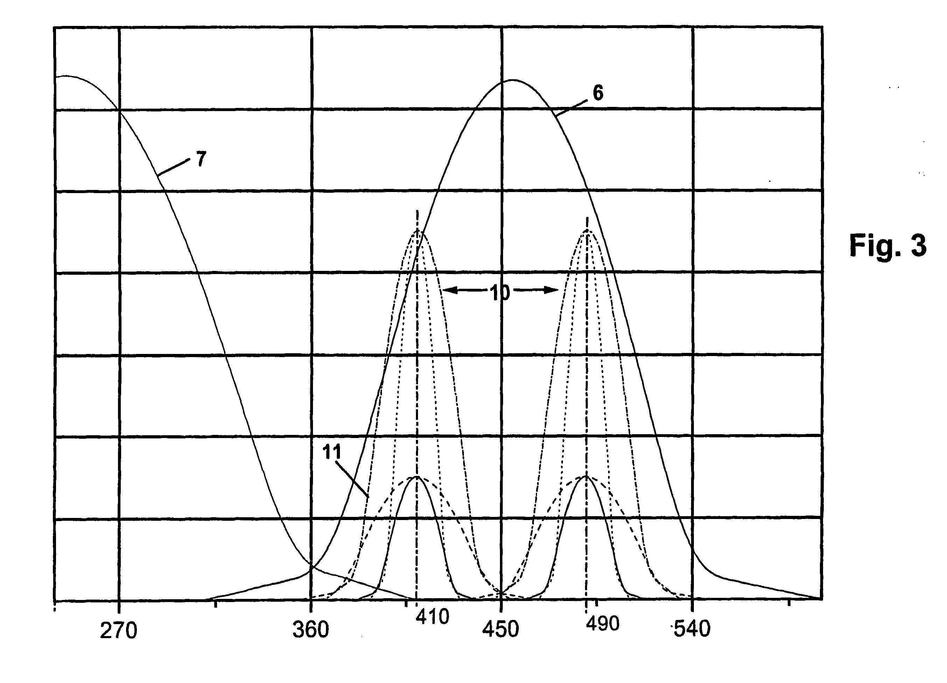

Zusätzlich oder alternativ hierzu kann das Auslaßventil 4 vor oder während des Ansaugens geöffnet werden, damit nicht nur Frisch-, sondern auch Abgas in den Zylinder 1 gelangt. Auch hier können Ventilhebungskurven 10, vgl. Fig. 3, entsprechend den Rahmenbedingungen unterschiedliche Öffnungs- und Schließzeitpunkte sowie Ventilhübe aufweisen. Zweckmäßigerweise öffnet das Auslaßventil 2 mit geringem Hub kurz nach dem Einlaßventil 4 und schließt deutlich vor diesem, vgl. die Ventilhebungskurve 11.

Anstelle der Betätigung der dem Ladungswechsel dienenden Ein- und Auslaßventile 2, 4 können zur Abgasrückführung ein oder mehrere Zusatzventile vorgesehen sein. Diese sind jeweils mit dem Ein- oder dem Auslaßkanal 3, 5 verbunden, zweckmäßigerweise über einen zusätzlichen Verbindungskanal.

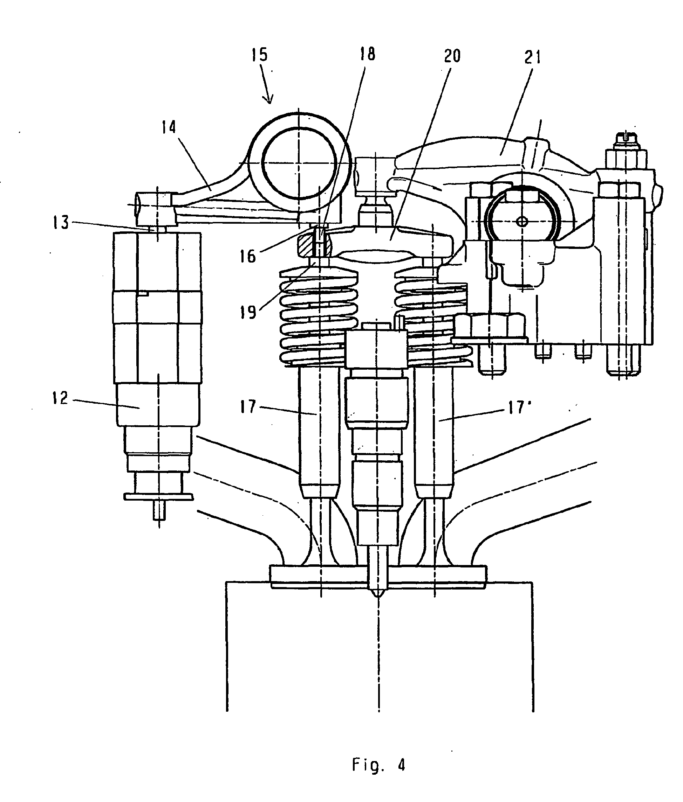

Zur Betätigung des Ein- und/oder des Auslaßventils 2, 4, ob als Ladungswechsel- oder Zusatzventil, kann ein an sich bekannter elektromagnetischer Aktuator 12 im Zylinderkopf angeordnet sein, vgl. Fig. 4. Der Aktuator 12 greift über seinen längsverschieblichen Bolzen 13 an einem Schenkel 14 eines im Zylinderkopf gelagerten Umlenkhebels 15 an. Der Umlenkhebel 15 wirkt mit seinem anderen Schenkel 16 über einen Freilauf auf ein zu steuerndes Ventil 17 ein. Der Freilauf wird hier gebildet durch einen Bolzen 18 am Schenkel 16, der in einer direkt auf ein Ventilschaftende 19 einwirkenden Ventilbrücke 20 in Verlängerung der Ventilachse gleitverschieblich geführt ist. Dadurch ist das Ventil 17 sowohl zum bekannten nockenwellengesteuerten Ladungswechsel über einen Kipphebel 21 und die Ventilbrücke 20 und unabhängig hiervon über den Umlenkhebel 15 zur Abgasrückführung oder Motorbremse od. dgl. betätigbar. Der Umlenkhebel 15 kann auch auf das ventilseitige Ende des Kipphebels 21 wirken, so daß die hier dargestellten Ventile 17, 17' zusammen betätigbar sind.

Zum Steuern der Öffnungs- und/oder Schließzeit und/oder des Ventilhubs des Ein- und/oder des Auslaßventils 2, 4 kann hierbei eine elektrische Steuereinrichtung vorgesehen sein. Dadurch sind die Motorbremse und/oder die , innere Abgasrückführung bedarfsabhängig zuschalt- und betriebszustandabhängig steuerbar. Die Ventilhebungskurven 8, 10 können so stets optimal an den aktuellen Lastzustand usw. der Brennkraftmaschine angepaßt werden. Zweckmäßigerweise ist hierfür ein elektronischer Speicher vorgesehen, in dem ein Kennfeld gespeichert ist, aus dem die Öffnungs- und/oder Schließzeit und/oder der Ventilhub als Funktion des Betriebszustands der Brennkraftmaschine abrufbar ist, um die gewünschte Abgasrückführungsrate bzw. den gewünschten Motorbremseffekt zu erzielen.

Der Aktuator 12 kann einen Permanentmagneten aufweisen, der in Richtung der Auslenkung des Bolzens 13 wirkt und einen elektrisch betätigten Schließermagneten im Aktuator 12 unterstützt, so daß der zur Auslenkung erforderliche Strombedarf verringert wird.

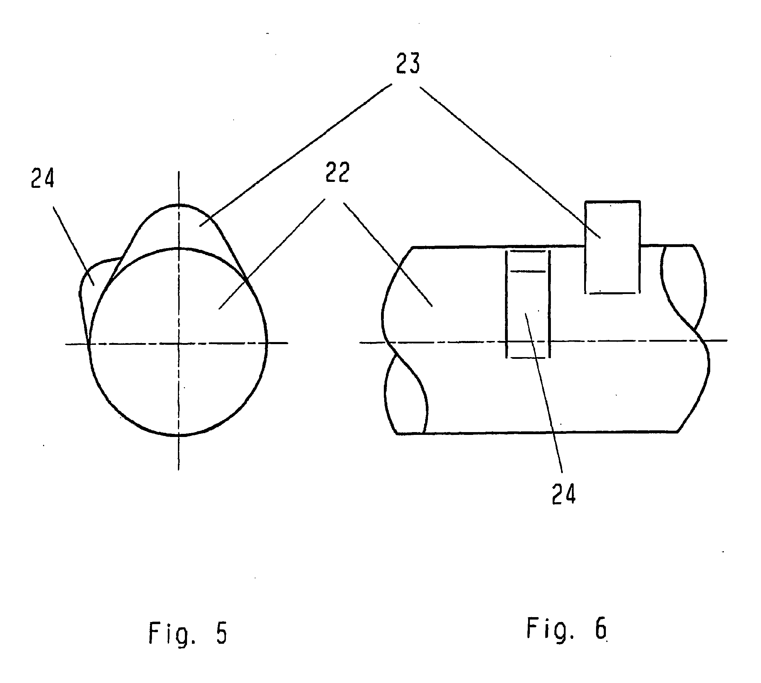

Die Betätigung des Ein- und/oder des Auslaßventils 2, 4 zur Abgasrückführung kann statt über den Aktuator 12 auch nockenwellengesteuert erfolgen. Hierzu weist eine Nockenwelle 22 sowohl einen Nocken 23 für den Ladungswechsel als auch einen Zusatznocken 24 für die Abgasrückführung auf, vgl. Fig. 5, die gegebenenfalls wie dargestellt entlang der Längsachse der Nockenwelle 22 voneinander beabstandet sind, vgl. Fig. 6. Bei Brennkraftmaschinen mit zwei Nockenwellen kann der Nocken 23 auf der einen und der Zusatznocken 24 auf der anderen Nockenwelle angeordnet sein.

Wenn die Nocken 23, 24 nicht wie in Fig. 5 gezeigt an einer Stelle einer Nockenwelle angeordnet sind, ist für jeden Nocken 23, 24 eine separate Ventilanlenkung erforderlich, die ein unabhängiges Betätigen des zugeordneten Ventils ermöglicht. Dies kann analog zur in Fig. 4 dargestellten Anlenkung erfolgen. Insbesondere kann den Nocken 23, 24 jeweils ein Kipphebel zugeordnet sein, wobei beide Kipphebel unabhängig auf ein Ventilschaftende oder eine Ventilbrücke wirken.

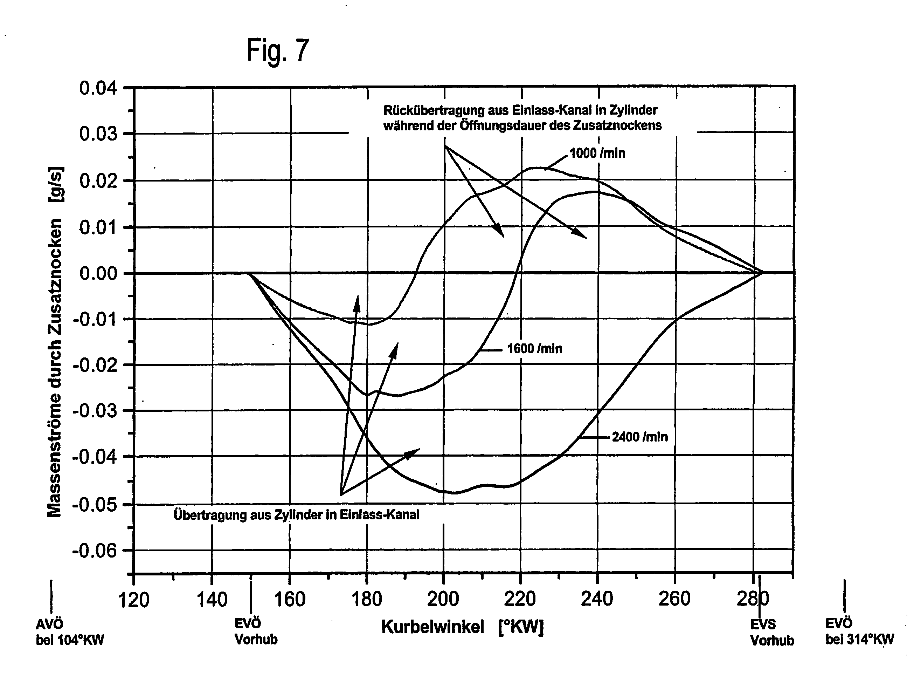

In dem in Fig. 7 dargestellten Diagramm sind beispielhaft für verschiedene Drehzahlen bei Vollast Kurven für den Fall aufgetragen sind, daß zusätzliche Öffnen des jeweiligen Einlaßventils 2 (EVÖ) durch den Zusatznocken 24 bei 150° Kurbelwinkel (°KW) nach dem oberen Totpunkt der Zündung beginnt, während das Öffnen des Auslaßventils 4 (AVÖ) bei 104°KW stattfindet, wobei die Kurven die Übertragung von Abgas in den Einlaßkanal bzw. aus diesem in den Zylinder 1 als Massenstrom [g/s] gegenüber dem Kurbelwinkel [°KW] aufgetragen darstellen. Die Kurventeile unterhalb der Nullachse stellen die Übertragung von Abgas aus dem jeweiligen Zylinder 1 in den Einlaßkanal 3 dar, während die Kurventeile oberhalb der Nullachse die Rückübertragung von Abgas aus dem Einlaßkanal 3 in den Zylinder 1 während der durch den Zusatznocken 24 bewirkten Öffnungsdauer des Einlaßventils 3 darstellen.

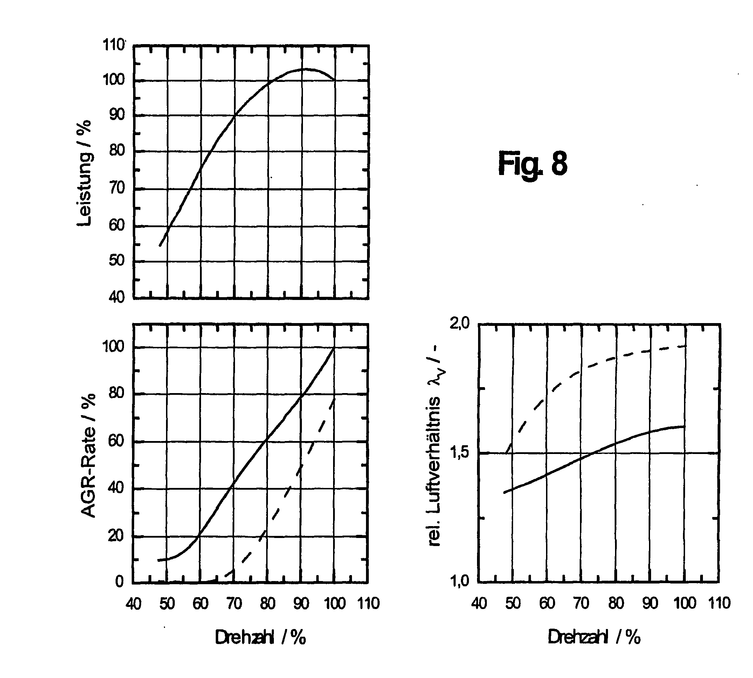

Fig. 8 zeigt in Bezug auf die innere Abgasrückführung durch zusätzliches Öffnen des Einlaßventils 3 mittels des Zusatznockens 24 diagrammartig einen rechnerischen Vergleich zwischen Leistung in %, Abgasrückführungsrate (AGR-Rate in %) und relativem Luftverhältnis lambdaᵥ, aufgetragen gegenüber der Drehzahl in %, zwischen einer Öffnung des Einlaßventils 3 bei etwa 180°KW nach dem oberen Totpunkt der Zündung (gemäß WO 03/040540), gestrichelte Kurven, und einer Öffnung bei 120°KW nach dem oberen Totpunkt der Zündung (erfindungsgemäß), durchgezogene Kurven, bei sonst gleichen Verhältnissen (AVÖ bei 85°KW), letzteres zeigt sich in dem Diagramm, in dem die Leistung gegenüber der Drehzahl aufgetragen ist, da dort beide Kurven zusammenfallen. Die beiden anderen Diagramme zeigen, daß bei einem Öffnen bei etwa 180°KW zu deutlich geringeren Abgasrückführungsmengen führt, und zwar bei etwa 70% Nenndrehzahl so gut wie keine Abgasrückführung mehr liefert, obwohl man diese dort benötigt und diese auch erfindungsgemäß geliefert werden, so daß sich über den gesamten Drehzahlbereich eine rauchfreie Verbrennung ergibt. Zwar führt das Öffnen bei etwa 180°KW zu hohen relativen Luftverhältnissen, jedoch werden diese nicht benötigt.

## Patentansprüche

1. Verfahren zur inneren Abgasrückführung in einer Brennkraftmaschine mit periodisch von einer Nockenwelle (22) nach dem Viertaktprinzip gesteuerten Ladungswechselventilen, bei dem während des Ladungswechselausschiebens von Abgas aus dem jeweiligen Zylinder (1) in den Auslaßkanal (5) durch Öffnen des Auslaßventils (4) ein zum jeweiligen Zylinder (1) gehöriges Einlaßventil (2) in einem Kurbelwinkelbereich nach dem oberen Totpunkt der Zündung des im Zylinder (1) befindlichen Gasgemisches geöffnet ist, um einen Teil des Abgases in einen Einlaßkanal (3) auszuschieben, so daß beim nächsten Ladungswechselansaugen sowohl Frisch- als auch Abgas aus dem Einlaßkanal (3) angesaugt wird, wobei das jeweilige Einlaßventil (2) während des Ladungswechselausschiebens unabhängig vom periodischen Ladungswechselansaugen betätigt wird, **dadurch gekennzeichnet, daß** das zusätzliche Öffnen des jeweiligen Einlaßventils (2) im Bereich von etwa 110 bis 150° Kurbelwinkel nach dem oberen Totpunkt der Zündung vorgenommen wird.

2. Verfahren nach Anspruch 1, **dadurch gekennzeichnet, daß** das zusätzliche Öffnen des jeweiligen Einlaßventils (2) im Bereich von 110 bis 130% des Öffnungswinkels des Beginns des Öffnens des Auslaßkanals (5) durch das Auslaßventil (4) vorgenommen wird.

3. Verfahren nach Anspruch 1 oder 2, **dadurch gekennzeichnet, daß** das Einlaßventil (2) und/oder das Auslaßventil (4) elektromechanisch angesteuert werden.

4. Verfahren nach Anspruch 3, **dadurch gekennzeichnet, daß** die Öffnungs- und/oder Schließzeit und/oder der Ventilhub des Ein- und/oder des Auslaßventils (2, 4) entsprechend dem Betriebszustand der Brennkraftmaschine gesteuert werden.

5. Verfahren nach Anspruch 3, **dadurch gekennzeichnet, daß** die Öffnungs- und/oder Schließzeit und/oder der Ventilhub aus einem elektronischen Speicher abgerufen werden.

6. Brennkraftmaschine mit periodisch von einer Nockenwelle (22) nach dem Viertaktprinzip betätigten Ladungswechselventilen zum Verbinden eines Zylinders (1) mit einem Einlaßkanal (3) beim Ladungswechselansaugen und mit einem Auslaßkanal (5) beim Ladungswechselausschieben, bei der
ein Auslaßventil (4) und ein Einlaßventil (2) vorgesehen sind, das während des Ladungswechselausschiebens von Abgas aus dem Zylinder (1) in den Auslaßkanal (5) zusätzlich geöffnet ist, um einen Teil des Abgases in den Einlaßkanal (3) auszuschieben, so daß beim nächsten Ladungswechselansaugen sowohl Frisch- als auch Abgas aus dem Einlaßkanal (3) in den Zylinder (1) angesaugt wird, wobei das zusätzliche Öffnen des jeweiligen Einlaßventils (2) im Bereich von 110 bis 150° Kurbelwinkel nach dem oberen Totpunkt der Zündung vorgesehen ist.

7. Brennkraftmaschine nach Anspruch 6, **dadurch gekennzeichnet, daß** eine Steuereinrichtung zum vom periodischen Ladungswechselausschieben unabhängigen Betätigen des Auslaßventils (4) während des Ladungswechselansaugens und/oder zum vom periodischen Ladungswechselansaugen unabhängigen Betätigen des Einlaßventils (2) während des Ladungswechselausschiebens vorgesehen ist.

8. Brennkraftmaschine nach Anspruch 6 oder 7, **dadurch gekennzeichnet, daß** ein elektromagnetischer Aktuator (12) an eine elektronische Steuereinrichtung angeschlossen ist und an einem Schenkel (14) eines im Zylinderkopf gelagerten Umlenkhebels (15) angreift, dessen anderer Schenkel (16) über einen Freilauf mit dem freien Ende eines der Ladungswechselventile gekoppelt ist, der ein nockenwellengesteuertes Öffnen des Ladungswechselventils ohne Anlenkung des Umlenkhebels (15) ermöglicht.

9. Brennkraftmaschine nach Anspruch 7, **dadurch gekennzeichnet, daß** die Steuereinrichtung zum Öffnen und Schließen des Ein- und/oder des Auslaßventils (2, 4) während des Ladungswechselausschiebens bzw. Ladungswechselansaugens aus einer geschlossenen Stellung vorgesehen ist.

10. Brennkraftmaschine nach einem der Ansprüche 6 bis 9, **dadurch gekennzeichnet, daß** das Einlaßventil (2) und/oder das Auslaßventil (4) Ladungswechselventile sind.

11. Brennkraftmaschine nach einem der Ansprüche 6 bis 9, **dadurch gekennzeichnet, daß** das Einlaßventil (2) und/oder das Auslaßventil (4) Zusatzventile sind, die während des Ladungswechselansaugens bzw. des Ladungswechselausschiebens beim Ladungswechsel schließbar sind.

12. Brennkraftmaschine nach einem der Ansprüche 7 bis 11, **dadurch gekennzeichnet, daß** die Steuereinrichtung einen Zusatznocken (24) auf der Nockenwelle (22) umfaßt.

13. Brennkraftmaschine nach einem der Ansprüche 7 bis 12, **dadurch gekennzeichnet, daß** das Ein- und/oder das Auslaßventil (2, 4) ein elektromechanisch betätigbares Ventil (17, 17') und die Steuereinrichtung ein Schaltkreis ist.

14. Brennkraftmaschine nach Anspruch 13, **dadurch gekennzeichnet, daß** die Steuereinrichtung zum Steuern der Öffnungs- und/oder Schließzeit und/oder des Ventilhubs des Ein- und/oder des Auslaßventils (2, 4) entsprechend dem Betriebszustand der Brennkraftmaschine ausgestaltet ist.

15. Brennkraftmaschine nach Anspruch 14, **dadurch gekennzeichnet, daß** ein elektronischer Speicher vorgesehen ist, in dem die Öffnungs- und/oder Schließzeit und/oder der Ventilhub als Funktion des Betriebszustands der Brennkraftmaschine gespeichert sind.

16. Brennkraftmaschine nach Anspruch 8, **dadurch gekennzeichnet, daß** der Freilauf ein in Verlängerung der Achse des Ladungswechselventils verschieblicher Bolzen (18) ist.

17. Brennkraftmaschine nach Anspruch 16, **dadurch gekennzeichnet, daß** der Bolzen (18) am ventilseitigen Schenkel (16) des Umlenkhebels (15) angeordnet ist.

18. Brennkraftmaschine nach einem der Ansprüche 8 bis 17, **dadurch gekennzeichnet, daß** der ventilseitige Schenkel (16) des Umlenkhebels (15) mit dem freien Ende (19) des Ladungswechselventils in Eingriff ist.

19. Brennkraftmaschine nach einem der Ansprüche 8 bis 18, **dadurch gekennzeichnet, daß** der ventilseitige Schenkel (16) des Umlenkhebels (15) mit einer Ventilbrücke (20) oder einem Kipphebel (21) für das Ladungsventil in Eingriff ist.

20. Verwendung der Brennkraftmaschine nach einem der Ansprüche 6 bis 19 zur Motorbremsung.

## Claims

1. An internal exhaust gas recirculation method in an internal combustion engine with charge changing valves periodically controlled by a camshaft (22) according to the four stroke principle, wherein, during the charge changing discharge of exhaust gas from the respective cylinder (1) into the outlet channel (5), by opening the outlet valve (4), there is opened an inlet valve (2) associated with the respective cylinder (1) in a crank angle range following the top dead centre of the ignition of the gas mixture in the cylinder (1), so that, during the next charge changing intake stroke both fresh gas and exhaust gas are drawn-in out of the inlet channel (3), wherein the respective inlet valve (2) is actuated during the charge changing discharge stroke independently of the periodic charge changing intake stroke,
**characterised in**
**that** the additional operation of opening the respective inlet valve (2) takes place in the range of approximately 110 to 150° crank angle following the top dead centre of the ignition.

2. A method according to claim 1,
**characterised in**
**that** the additional process of opening the respective inlet valve (2) is effected in the range of 110 to 130 % of the opening angle of the start of the process of opening the outlet channel (5) by the outlet valve (4) .

3. A method according to claim 1 or 2,
**characterised in**
**that** the inlet valve (2) and/or the outlet valve (4) are controlled electro-mechanically.

4. A method according to claim 3,
**characterised in**
**that** the opening and/or closing time and/or the valve stroke of the inlet valve and/or outlet valve (2, 4) are controlled in accordance with the operational condition of the internal combustion engine.

5. A method according to claim 3,
**characterised in**
**that** the opening time and/or closing time and/or the valve stroke are called up from an electronic memory.

6. An internal combustion engine having charge changing valves which are operated periodically by a camshaft (22) in accordance with the four-stroke principle and which are provided for connecting a cylinder (1) to an inlet channel (3) during the charge changing intake stroke and to the outlet channel (5) during charge changing discharge stroke, wherein
there are provided an outlet valve (4) and an inlet valve (2) which is opened additionally during the charge changing discharge of exhaust gas from the cylinder (1) into the outlet channel (5) in order to discharge part of the exhaust gas into the inlet channel (3), so that, during the next charge changing intake stroke both fresh gas and exhaust gas are drawn-in out of the inlet channel (3) into the cylinder (1), wherein the additional operation of opening the respective inlet valve(2) takes place in the range of 110 to 150° crank angle following the top dead centre of the ignition.

7. An internal combustion engine according to claim 6,
**characterised in**
**that** there is provided a control device for operating the outlet valve (4) independently of the periodic charge changing intake stroke and/or for operating the inlet valve (2) independently of the periodic charge changing intake stroke during the charge changing discharge stroke.

8. An internal combustion engine according to claim 6 or 7,
**characterised in**
**that** an electro-magnetic actuator (12) is connected to an electronic control device and acts on an arm (14) of a deflection lever (15) which is supported in the cylinder head and whose other arm (16) is coupled via a free-wheeling unit to the free end of one of the charge changing valves, which other arm (16) permits the charge changing valve to be opened in a way controlled by the camshaft without articulating the deflection lever (15).

9. An internal combustion engine according to claim 7,
**characterised in**
**that** the control device for opening and closing the inlet valve and outlet valve (2, 4) takes place during the charge changing discharge stroke and during the charge changing intake stroke from a closed position.

10. An internal combustion engine according to any one of claims 6 to 9,
**characterised in**
**that** the inlet valve (2) and/or the outlet valve (4) are charge changing valves.

11. An internal combustion engine according to any one of claims 6 to 9,
**characterised in**
**that** the inlet valve (2) and/or the outlet valve (4) are additional valves which can be closed during charge changing intake stroke and charge changing discharge stroke respectively.

12. An internal combustion engine according to any one of claims 7 to 11,
**characterised in**
**that** the control device comprises an additional cam (24) on the camshaft (22).

13. An internal combustion engine according to any one of claims 7 to 12,
**characterised in**
**that** the inlet valve and/or the outlet valve (2, 4) are electro-mechanically controlled valves (17, 17') and that the control device is an electric circuit.

14. An internal combustion engine according to claim 13,
**characterised in**
**that** the control device for controlling the opening and/or closing time and/or the valve stroke of the inlet and/or outlet valve (2/4) is designed to operate in accordance with the operating condition of the internal combustion engine.

15. An internal combustion engine according to claim 14,
**characterised in**
**that** there is provided an electronic memory in which the opening and/or closing time and/or the valve stroke are stored as a function of the operating condition of the internal combustion engine.

16. An internal combustion engine according to claim 8,
**characterised in**
**that** the free-wheeling unit is a pin being displaceable in the extension of the axis of a charge charging valve.

17. An internal combustion engine according to claim 16,
**characterised in**
**that** the pin (18) is arranged at the arm (16) of the deflection lever (15), which leg (16) faces the valve.

18. An internal combustion engine according to any one of claims 8 to 17,
**characterised in**
**that** the valve-facing arm (16) of the deflection lever (15) engages the free end (19) of the charge changing valve.

19. An internal combustion engine according to any one of claims 8 to 18,
**characterised in**
**that** the valve-facing arm (16) of the deflection lever (15) engages a valve bridge (20) or a rocker lever (21) for the charge changing valve.

20. Use of the internal combustion engine according to any one of claims 6 to 19 for engine braking purposes.

## Revendications

1. Procédé de recyclage interne de gaz d'échappement dans un moteur à combustion interne comprenant des soupapes de changement de gaz, commandées périodiquement par un arbre à cames (22) selon le principe à quatre temps, d'après lequel, pendant le mouvement de gaz de refoulement de gaz d'échappement hors du cylindre (1) considéré vers le canal d'échappement (5) par ouverture de la soupape d'échappement (4), une soupape d'admission (2) appartenant au cylindre (1) respectivement considéré est ouverte sur une plage d'angle de vilebrequin après le point mort haut de l'allumage du mélange de gaz se trouvant dans le cylindre (1), en vue de refouler une partie du gaz d'échappement dans un canal d'admission (3), de sorte que lors du prochain mouvement de gaz d'aspiration, aussi bien du gaz frais que du gaz d'échappement sont aspirés à partir du canal d'admission (3), la soupape d'admission (2) respective considérée étant actionnée pendant le changement de gaz de refoulement, indépendamment du changement de gaz d'aspiration périodique,
**caractérisé en ce que** l'ouverture supplémentaire de la soupape d'admission (2) respective considérée est effectuée dans la plage d'environ 110 à 150° d'angle de vilebrequin après le point mort haut de l'allumage.

2. Procédé selon la revendication 1, **caractérisé en ce que** l'ouverture supplémentaire de la soupape d'admission (2) respective considérée est effectuée dans une plage de 110 à 130% de l'angle d'ouverture du début de l'ouverture du canal d'échappement (5) par la soupape d'échappement (4).

3. Procédé selon la revendication 1 ou 2, **caractérisé en ce que** la soupape d'admission (2) et/ou la soupape d'échappement (4) sont commandées par voie électromécanique.

4. Procédé selon la revendication 3, **caractérisé en ce que** le temps d'ouverture et/ou de fermeture et/ou la course de soupape de la soupape d'admission et/ou d'échappement (2, 4) sont commandés en fonction de l'état de fonctionnement du moteur à combustion interne.

5. Procédé selon la revendication 3, **caractérisé en ce que** le temps d'ouverture et/ou de fermeture et/ou la course de soupape sont appelés à partir d'une mémoire électronique.

6. Moteur à combustion interne comprenant des soupapes de changement de gaz actionnées périodiquement par un arbre à cames (22) selon le principe du quatre temps, pour relier un cylindre (1) à un canal d'admission (3) lors du changement de gaz d'aspiration, et à un canal d'échappement (5) lors du changement de gaz de refoulement, dans lequel
sont prévues une soupape d'échappement (4) et une soupape d'admission (2) qui est ouverte en supplément pendant le changement de gaz de refoulement de gaz d'échappement hors du cylindre (1) vers le canal d'échappement (5), en vue de refouler une partie du gaz d'échappement dans le canal d'admission (3), de sorte que lors du prochain changement de gaz d'aspiration, aussi bien du gaz frais que du gaz d'échappement sont aspirés dans le cylindre (1) à partir du canal d'admission (3), l'ouverture supplémentaire de la soupape d'admission (2) respective considérée étant prévue dans la plage d'environ 110 à 150° d'angle de vilebrequin après le point mort haut de l'allumage.

7. Moteur à combustion interne selon la revendication 6, **caractérisé en ce qu'**il est prévu un dispositif de commande pour l'actionnement de la soupape d'échappement (4) indépendamment du changement de gaz de refoulement périodique, pendant le changement de gaz d'aspiration, et/ou pour l'actionnement de la soupape d'admission (2) indépendamment du changement de gaz d'aspiration périodique, pendant le changement de gaz de refoulement.

8. Moteur à combustion interne selon la revendication 6 ou 7, **caractérisé en ce qu'**un actionneur électromagnétique (12) est raccordé à un dispositif de commande électronique, et agit sur une branche (14) d'un levier de renvoi (15) monté dans la culasse et dont l'autre branche (16) est couplée à l'extrémité libre de l'une des soupapes de changement de gaz par l'intermédiaire d'un système dit de roue libre qui permet une ouverture de la soupape de changement de gaz commandée par l' arbre à cames sans déviation du levier de renvoi (15).

9. Moteur à combustion interne selon la revendication 7, **caractérisé en ce que** le dispositif de commande est prévu pour l'ouverture et la fermeture de la soupape d'admission et/ou d'échappement (2, 4) pendant le changement de gaz de refoulement respectivement le changement de gaz d'aspiration, à partir d'une position fermée.

10. Moteur à combustion interne selon l'une des revendications 6 à 9, **caractérisé en ce que** la soupape d'admission (2) et/ou la soupape d'échappement (4) sont des soupapes de changement de gaz.

11. Moteur à combustion interne selon l'une des revendications 6 à 9, **caractérisé en ce que** la soupape d'admission (2) et/ou la soupape d'échappement (4) sont des soupapes supplémentaires, qui peuvent être fermées pendant le changement de gaz d'aspiration et respectivement le changement de gaz de refoulement, lors du changement de gaz.

12. Moteur à combustion interne selon l'une des revendications 7 à 11, **caractérisé en ce que** le dispositif de commande comprend une came supplémentaire (24) sur l'arbre à cames (22).

13. Moteur à combustion interne selon l'une des revendications 7 à 12, **caractérisé en ce que** la soupape d'admission et/ou d'échappement (2, 4) est une soupape (17, 17') pouvant être actionnée par voie électromécanique, et le dispositif de commande est un circuit de commande.

14. Moteur à combustion interne selon la revendication 13, **caractérisé en ce que** le dispositif de commande est configuré pour commander le temps d'ouverture et/ou de fermeture et/ou la course de soupape de la soupape d'admission et/ou d'échappement (2, 4), conformément à l'état de fonctionnement du moteur à combustion interne.

15. Moteur à combustion interne selon la revendication 14, **caractérisé en ce qu'**il est prévu une mémoire électronique dans laquelle sont mémorisés le temps d'ouverture et/ou de fermeture et/ou la course de soupape, en tant que fonction de l'état de fonctionnement du moteur à combustion interne.

16. Moteur à combustion interne selon la revendication 8, **caractérisé en ce que** le système dit à roue libre est une broche (18) pouvant coulisser dans le prolongement de l'axe de la soupape de changement de gaz.

17. Moteur à combustion interne selon la revendication 16, **caractérisé en ce que** la broche (18) est agencée sur la branche (16), côté soupape, du levier de renvoi (15).

18. Moteur à combustion interne selon l'une des revendications 8 à 17, **caractérisé en ce que** la branche (16) du levier de renvoi (15), située du côté de la soupape, est en prise avec l'extrémité libre (19) de la soupape de changement de gaz.

19. Moteur à combustion interne selon l'une des revendications 8 à 18, **caractérisé en ce que** la branche (16) du levier de renvoi (15), située du côté de la soupape, est en prise avec un pontet de soupape (20) ou un basculeur (21) pour la soupape de changement de gaz.

20. Utilisation du moteur à combustion interne selon l'une des revendications 6 à 19 pour le frein moteur.
